# EUROPÄISCHE PATENTSCHRIFT

(11) **EP 3 997 023 B1**
(45) Veröffentlichungstag und Bekanntmachung des Hinweises auf die Patenterteilung: **12.04.2023**
(21) Anmeldenummer: 20734977.0
(22) Anmeldetag: 02.07.2020
(51) Int. Cl.: B66B 1/46, B66B 3/00

(54) **BERÜHRUNGSEMPFINDLICHE AUFZUGSBEDIENEINRICHTUNG FÜR FAHRTRICHTUNGSRUFE**
TOUCH-SENSITIVE LIFT CONTROL DEVICE FOR CALLS
DISPOSITIF DE COMMANDE D'ASCENSEUR TACTILE POUR APPEL DE DIRECTION DE DÉPLACEMENT

(30) Priorität: 10.07.2019 EP 19185457
(43) Veröffentlichungstag der Anmeldung: 18.05.2022
(73) Patentinhaber: INVENTIO AG, 6052 Hergiswil (CH)
(72) Erfinder: ACKERMANN, Marcel, 9533 Kirchberg SG (CH); HÄFLIGER, Nicolas, 6315 Oberägeri (CH)
(74) Vertreter: Inventio AG
(86) Internationale Anmeldenummer: PCT/EP2020/068689
(87) Internationale Veröffentlichungsnummer: WO 2021/004892

(56) Entgegenhaltungen:
- EP-A1- 3 315 443
- WO-A1-2012/098284
- WO-A1-2018/050654

## Beschreibung

Die hier beschriebene Technologie betrifft allgemein eine Aufzugsanlage in einem Gebäude. Ausführungsbeispiele der Technologie betreffen insbesondere eine Aufzugsanlage mit Aufzugsbedieneinrichtungen für Passagiere mit körperlichen Einschränkungen, ein Verfahren zum Betreiben einer solchen Aufzugsanlage und eine Aufzugsbedieneinrichtung für eine solche Aufzugsanlage.

In Gebäuden mit Aufzugsanlagen sind auf den einzelnen Stockwerken Aufzugsbedieneinrichtungen angeordnet, mit denen ein Passagier einen Aufzug rufen kann. In bekannten Aufzugsanlagen hat eine auf einem Stockwerk angeordnete Aufzugsbedieneinrichtung mechanische Drucktasten, mit denen der Passagier die gewünschte Fahrtrichtung (aufwärts/abwärts) eingeben kann. Mit dem Drücken einer dieser Tasten wird ein Aufzugsruf eingegeben, woraufhin eine Aufzugssteuerung den Aufzugsruf an der Aufzugsbedieneinrichtung bestätigt und eine Aufzugskabine auf dem Stockwerk zum Einsteigen zur Verfügung stellt, beispielsweise wird eine Aufzugskabine auf das Stockwerk (Einsteigestockwerk) verfahren und deren Aufzugstür wird geöffnet. In der Aufzugskabine ist eine Kabinenbedieneinrichtung (Kabinenrufeinrichtung) vorhanden, mit der der Passagier in der Aufzugskabine das gewünschte Zielstockwerk eingeben kann.

Die genannte Bestätigung des Aufzugsrufs erfolgt üblicherweise optisch und akustisch. Dafür hat die Aufzugsbedieneinrichtung eine Beleuchtungseinrichtung und z. B. einen Summer, d. h. einen elektrisch angesteuerten Akustik-Signalgeber, der einen hörbaren Summ- oder Piepton erzeugen kann. Die Beleuchtungseinrichtung hat z. B. für jede Taste eine Lichtquelle, die die gedrückte Taste ausleuchtet oder durch einen anderen Lichteffekt hervorhebt. Diese Funktionalitäten hat z. B. eine in EP 1 633 669 B1 beschriebene Aufzugsbedieneinrichtung. Zusätzlich dazu bestätigt die in EP 1 633 669 B 1 beschriebene Aufzugsbedieneinrichtung eine gedrückte Taste durch eine durch den Tastsinn wahrnehmbare (taktile) Rückmeldung, die z. B. auch von Passagieren mit eingeschränkter Sehfähigkeit wahrgenommen werden kann.

EP 3 315 443 A1 offenbart ein System zur Bedienung eines Aufzugs, das eine Projektionsvorrichtung, eine Erfassungsvorrichtung und eine Anzeigeoberfläche in der Nähe der Erfassungsanordnung umfasst. Die Anzeigeoberfläche zeigt ein von der Projektionsvorrichtung projiziertes Anzeigebild an. Eine Steuerung bestimmt eine Eingabe basierend auf einem erkannten Objekt, das von der Erfassungsvorrichtung erkannt wird, und erzeugt ein Signal basierend auf der Eingabe, um ein Aufzugsystem zu steuern.

WO 2012/098284 A1 offenbart eine berührungsempfindliche Anzeigeeinrichtung, die ein Anzeigeelement, Kraftsensoren zur Messung der auf das Anzeigeelement wirkenden Kräfte und Kraftkomponenten zur Erzeugung von auf das Anzeigeelement wirkenden Kräften. Die Kraftkomponenten werden verwendet, um einer Person eine haptische Kontaktrückmeldung zu geben, wenn die Person eine Stelle drückt, die auf dem Anzeigeelement als Drucktaste markiert ist. Die Person nimmt die Berührungsrückmeldung in ihrer Fingerkuppe entweder als Vibration der Oberfläche des Anzeigeelements oder als stoßartige Bewegung wahr. Eine solche Kontaktrückmeldung ist ein Signal an die Person, dass eine auf dem Anzeigeelement dargestellte Drucktaste erfolgreich gedrückt wurde.

WO 2018/050654 A1 offenbart ein Stockwerkterminal für eine Aufzugsanlage, das ein Aufzugsbedienterminal und ein Funk-Netzwerkgerät umfasst. Das Aufzugsbedienterminal hat ein Nutzerinterface zum Rufen einer Aufzugskabine, und das Funk-Netzwerkgerät hat einen Funktransceiver für eine Kommunikation mit einer auf einem Stockwerk vorhanden Kommunikationseinrichtung und ein Dateninterface für eine Datenkommunikation mit dem Netzwerkzugangspunkt.

Obwohl in bekannten Aufzugsanlagen derartige Aufzugsbedieneinrichtungen die Eingabe der gewünschten Fahrtrichtung erlauben und die Rufeingabe bestätigen, u. a. auch durch eine taktile Rückmeldung, können je nach Gebäude zusätzliche Anforderungen an die Aufzugsbedieneinrichtungen bestehen. Diese Anforderungen können beispielsweise bzgl. der Gestaltung (z. B. Grösse und Form), der Benutzerfreundlichkeit (insbesondere in Anbetracht von Passagieren mit körperlichen Einschränkungen, z. B. der Sehfähigkeit) und/oder der Wartungsfreundlichkeit bestehen. Es besteht daher ein Bedarf an einer Technologie, die eine oder mehrere dieser Anforderungen erfüllt.

Ein erster Aspekt der vorliegenden Erfindung betrifft eine Aufzugsanlage gemäß Anspruch 1.

Ein zweiter Aspekt der vorliegenden Erfindung betrifft eine Aufzugsbedieneinrichtung zur Eingabe eines Aufzugsrufes in einer solchen Aufzugsanlage.

Durch die hier beschriebene Technologie wird eine Aufzugsanlage geschaffen, bei der eine auf einem Stockwerk angeordnete Aufzugsbedieneinrichtung trotz eines berührungsempfindlichen Bildschirmsystem mit einer im Wesentlichen glatten Berührungsfläche sowohl von Passagieren mit als auch ohne körperliche Einschränkungen komfortabel und zuverlässig bedient werden kann. Auf der Benutzeroberfläche wird beispielsweise ein Rufsymbol sichtbar dargestellt. Die Eingabe eines Aufzugsrufs wird durch die taktil wahrnehmbare Rückmeldung bestätigt. Passagiere ohne körperliche Einschränkungen können die Aufzugsbedieneinrichtungen somit in gewohnter und vertrauter Weise benutzen.

Passagiere mit körperlichen Einschränkungen, beispielsweise eine eingeschränkte Sehfähigkeit, bei Blindheit oder Bewegungseinschränkungen, können die Aufzugsbedieneinrichtung ebenso nutzen, wie Passagiere ohne eine solche Einschränkung. Da Passagiere mit eingeschränkter Sehfähigkeit ein dargestelltes Rufsymbol nicht oder nur sehr schlecht erkennen und auf der glatten Oberfläche auch nicht ertasten können, unterstützt die Aufzugsbedieneinrichtung die Rufeingabe mit Hilfe der taktil wahrnehmbaren Rückmeldung. In einem Ausführungsbeispiel hat eine Aufzugsbedieneinrichtung eine Audioeinrichtung für eine Sprachmitteilung, die in Verbindung mit der taktil wahrnehmbaren Rückmeldung erzeugt wird. Dadurch werden insbesondere Passagiere mit körperlichen Einschränkungen unterstützt, weil sie sich auf der Berührungsfläche besser orientieren und somit beispielsweise eine gewünschte Fahrtrichtung sicher eingeben können. Die Aufzugsanlage und insbesondere deren Aufzugsbedieneinrichtungen sind somit für einen Grossteil der Passagiere nutzbar.

In einem Ausführungsbeispiel stellt das auf der Benutzeroberfläche angezeigte Rufsymbol eine Drucktaste oder ein Symbol für eine Drucktaste dar. Die dargestellte Drucktaste kann z. B. einer bekannten elektromechanischen Drucktaste (z. B. in runder oder rechteckiger Form) nachempfunden sein. In einem anderen Ausführungsbeispiel stellt das auf der Benutzeroberfläche angezeigte Rufsymbol ein Fahrtrichtungssymbol dar, je nach Stockwerk beispielsweise für die Aufwärts- oder die Abwärtsrichtung. Auf einem Zwischenstockwerk zeigt die Benutzeroberfläche beispielsweise ein Fahrtrichtungssymbol für die Aufwärtsrichtung und ein Fahrtrichtungssymbol für die Abwärtsrichtung an. Die Fahrtrichtungssymbole können beispielsweise als dreieckförmige Symbole oder andersartig gestaltete Richtungssymbole dargestellt werden, z. B. nach oben bzw. nach unten zeigende Pfeilsymbole. Ein Rufsymbol kann auch einen farbigen oder einfarbigen Lichteffekt umfassen. Ein Lichteffekt kann auch zur Bestätigung einer Rufeingabe verwendet werden. Die genannten Beispiele lassen erkennen, dass die hier beschriebene Technologie grosse Flexibilität hinsichtlich der Darstellung eines Rufsymbols ermöglicht. Zudem können Passagiere ohne körperliche Einschränkungen die Aufzugsbedieneinrichtung intuitiv bedienen.

In einem Ausführungsbeispiel ist das Bildschirmsystem ausgestaltet, bei Berührung des mindestens einen Rufsymbols durch den Passagier mit der taktil wahrnehmbaren Rückmeldung zu reagieren und eine Eingabe eines Aufzugsruf zu erkennen, wenn die Berührung eine festgelegte Druckkraft erreicht. Dadurch wird erreicht, dass nicht jede Berührung, z. B. eine unabsichtliche oder zufällige Berührung, zu einer Rufeingabe führt, sondern nur dann, wenn der Passagier ausreichend stark auf das Rufsymbol drückt.

In Verbindung mit der Sprachmitteilung reagiert das Bildschirmsystem in einem Ausführungsbeispiel auf eine leichte Berührung (d. h. eine Berührung mit geringer Druckkraft) mit einer Sprachmitteilung. Befindet sich an der Stelle, an der der Passagier die Berühroberfläche berührt das Rufsymbol, teilt die Sprachmitteilung dies dem Passagier mit; wird z. B. ein Fahrtrichtungssymbol berührt, gibt die Sprachmitteilung die Fahrtrichtung an. Befindet sich an dieser Stelle kein Rufsymbol oder Informationsfeld, erfolgt in einem Ausführungsbeispiel keine Sprachmitteilung. Entspricht die Sprachmitteilung dem Wunsch des Passagiers (d. h. Eingabe eines Aufzugsrufs bzw. Eingabe der Fahrtrichtung), kann der Passagier die entsprechende Stelle stärker drücken, um den Aufzugsruf einzugeben. Auch dadurch werden Passagiere mit einer körperlichen Einschränkung bei der Bedienung unterstützt. Zusätzlich erhöht ein solches zweistufiges Vorgehen die Wahrscheinlichkeit, dass nur tatsächlich bestehende Fahrtwünsche registriert werden.

In einem Ausführungsbeispiel umfasst das berührungsempfindliche Bildschirmsystem einen Aktuator, der bei Ansteuerung durch eine Steuerspannung eine Vibration einer Oberfläche des Bildschirmsystems verursacht, wobei die Vibration die taktil wahrnehmbare Rückmeldung darstellt. Die Art und Stärke der Vibration können dabei flexibel festgelegt werden. Das berührungsempfindliche Bildschirmsystem umfasst zudem eine Kraftmesseinrichtung und eine Steuereinrichtung. Die Kraftmesseinrichtung ist ausgestaltet, eine Kraft zu messen, mit der ein Passagier auf die Benutzeroberfläche des Bildschirmsystems drückt, wobei die Steuereinrichtung ausgestaltet ist, die gemessene Kraft erst dann als Auslösekraft registriert, wenn die gemessene Kraft einen festgelegten Schwellwert erreicht. Wie bereits erwähnt, können dadurch Fehleingaben, die durch ungewolltes Berühren verursacht werden, reduziert werden, weil der Passagier seinen Fahrtwunsch durch stärkeres Drücken anzeigen muss.

In einem Ausführungsbeispiel ist die Aufzugssteuerung ausgestaltet, eine Aufzugsbedieneinrichtungen im Normalbetriebsmodus so anzusteuern, dass das Bildschirmsystem zusätzlich zu dem mindestens einen Rufsymbol mindestens ein Informationsfeld anzeigt, wobei das Bildschirmsystem ausgestaltet ist, bei Berührung des mindestens einen Informationsfeldes durch den Passagier mit der taktil wahrnehmbaren Rückmeldung zu reagieren. Das Aufzugsbedienterminal kann somit flexibel an gebäudespezifische Anforderungen angepasst werden. Zusätzlich können dadurch Passagiere komfortabel, aktuell und umfangreicher informiert werden, beispielsweise über eine geplante Wartung der Aufzugsanlage; es kann aber auch angegeben sein, welcher Dienstleister (z. B. Arzt, Zahnarzt, Anwalt o. ä.) sich auf einem bestimmten Stockwerk befindet.

In einem Ausführungsbeispiel zeigt das Informationsfeld Information zu einem festgelegten Stockwerk an, beispielsweise welcher Dienstleister sich auf dem Stockwerk befindet. Die Aufzugsbedieneinrichtung ist ausgestaltet ist, bei Berührung des Informationsfelds durch den Passagier die taktil wahrnehmbare Rückmeldung und eine dem Informationsfeld zugeordnete Sprachmitteilung zu erzeugen. Die Sprachmitteilung kann beispielsweise den Namen des Dienstleisters und das Stockwerk angeben. Wünscht der Passagier auf oder in Richtung dieses Stockwerks zu fahren, drückt er auf das Informationsfeld. Wenn die Druckkraft gleich einem festgelegten Schwellenwert ist, registriert die Aufzugsbedieneinrichtung einen Fahrtwunsch in Richtung des festgelegten Stockwerks. Nach dem Einsteigen in die Aufzugskabine kann der Passagier an der Kabinenrufeinrichtung das gewünschte Stockwerk eingeben.

Die hier beschriebene Technologie schafft nicht nur eine Aufzugsanlage und dazugehörige Aufzugsbedieneinrichtungen, die von einem Grossteil der Passagiere komfortabel und zuverlässig nutzbar sind, sondern erlaubt auch die Berücksichtigung von Sicherheitsaspekten. In einem Ausführungsbeispiel hat eine Aufzugsbedieneinrichtung ein mit der Aufzugssteuerung kommunikativ verbundenes Lesegerät für einen Berechtigungsnachweis des Passagiers. Die Art des Berechtigungsnachweises kann an die Gegebenheiten im Gebäude angepasst sein, beispielsweise kann er in Form eines physischen Schlüssels, eines manuell eingegebenen Kennworts (z. B. ein PIN Code), eines biometrischen Merkmals (z. B. Fingerabdruck, Irismuster, Gesichtsmerkmalen, Sprach/Stimmcharakteristika) oder eines von einer Magnet-, Chip- oder RFID Karte oder einem mobilen elektronischen Gerät (NFC-, Bluetooth- oder Mobilfunk-basiert) erfassten Zugangsodes gewählt werden. Für Passagiere mit körperlichen Einschränkungen kann beispielsweise ein mobiles elektronisches Gerät den Berechtigungsnachweise per Funk zum Lesegerät senden. Ist der Berechtigungsnachweis gültig, gibt die Aufzugsbedieneinrichtung die Eingabe eines Aufzugsrufs frei. Somit können nur berechtigte Passagier einen Aufzug rufen, wodurch der Zugang zum Aufzug und damit auch zu den Stockwerken kontrolliert werden kann.

Das gemäss der hier beschriebenen Technologie genutzte berührungsempfindliche Bildschirmsystem umfasst einen Touchscreen. Ein Touchscreen ist je nach Anwendung und Anforderungen in verschieden Grössen bzw. Abmessungen herstellbar. Somit kann auch die Grösse des Bildschirmsystems gemäss den Anforderungen im Gebäude gewählt werden, so dass beispielsweise ein relativ kleines Bildschirmsystem gewählt werden kann, wenn im Normalbetriebsmodus lediglich das Rufsymbol angezeigt werden soll. Sollen zusätzlich ein oder mehrere Informationsfelder angezeigt werden, kann die Grösse des Bildschirmsystems entsprechen gewählt werden.

Neben dieser Flexibilität hinsichtlich der Grösse bietet ein Touchscreen auch den Vorteil, dass er eine glatte Oberfläche hat. Verschmutzung können von einer glatten Oberfläche leichter entfernt werden, als beispielsweise von einer Anordnung mit einer oder mehreren Tasten mit Erhöhungen und/oder Rillen und Spalten. Der Wartungsaufwand wird dadurch reduziert.

Die hier beschriebene Technologie ermöglicht auch gestalterische Freiheiten, beispielsweise hinsichtlich einer passagierseitigen Form einer Aufzugsbedieneinrichtung. Deren Gehäuse kann aus Sicht des Passagiers z. B. rechteckförmig sein, wobei der Touchscreen entweder parallel zur Vertikalen (Wand) oder (zur besseren Bedienbarkeit (Sichtbarkeit)) dazu geneigt angeordnet sein kann. Insbesondere in Gebäuden, für die ein zeitgemässes bzw. modernes Erscheinungsbild gewünscht ist, können die mit Touchscreens ausgestatteten Aufzugsbedieneinrichtungen dazu beitragen, dieses Ziel zu erreichen.

Im Folgenden sind verschiedene Aspekte der verbesserten Technologie anhand von Ausführungsbeispielen in Verbindung mit den Figuren näher erläutert. In den Figuren haben gleiche Elemente gleiche Bezugszeichen. Es zeigen:
- Fig. 1: eine schematische Darstellung einer beispielhaften Situation in einem Gebäude mit mehreren Stockwerken und einer beispielhaften Aufzugsanlage;
- Fig. 2: eine schematische Darstellung einer beispielhaften ersten Benutzeroberfläche einer Aufzugsbedieneinrichtung, die in der Aufzugsanlage gemäss Fig. 1 auf einem Stockwerk angeordnet ist;
- Fig. 3: eine schematische Darstellung einer beispielhaften zweiten Benutzeroberfläche der Aufzugsbedieneinrichtung;
- Fig. 4: eine schematische Darstellung der Aufzugsbedieneinrichtung und beispielhaften Komponenten; und
- Fig. 5: eine beispielhafte Darstellung eines nicht beanspruchten Verfahrens zum Betreiben der Aufzugsanlage.

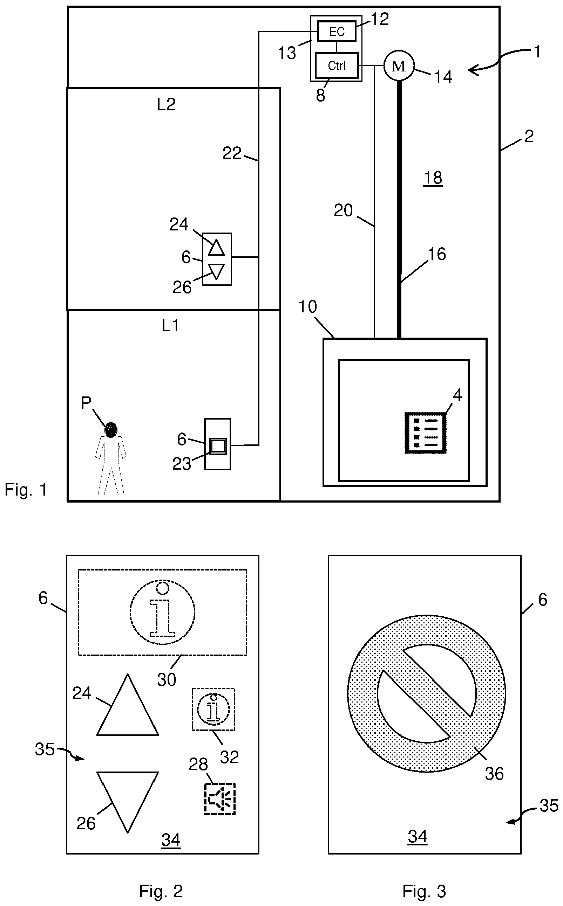

Fig. 1 ist eine schematische Darstellung einer beispielhaften Situation in einem Gebäude 2, das mehrere Stockwerke L1, L2 hat, die von einer Aufzugsanlage 1 bedient werden. Das Stockwerk L1 kann eine Eingangshalle des Gebäudes 2 sein, in die Passagiere P beim Betreten des Gebäudes 2 gelangen und von dem aus sie das Gebäude 2 wieder verlassen. Betritt ein Passagier P das Stockwerk L1, kann von dort aus - bei entsprechender Zugangsberechtigung - jedes von der Aufzugsanlage 1 bediente Stockwerk L2 des Gebäudes 2 erreicht werden. Aus Darstellungsgründen sind in Fig. 1 von der Aufzugsanlage 1 nur eine Aufzugssteuerung 13, eine Antriebsmaschine 14, ein Tragmittel 16 (z. B. Stahlseile oder Flachriemen), eine am Tragmittel 16 hängende und in einem Schacht 18 verfahrbare Aufzugskabine 10 (im Folgenden auch als Kabine 10 bezeichnet) und eine Anzahl von Aufzugsbedieneinrichtungen 6, die durch ein Kommunikationsnetzwerk 22 mit der Aufzugssteuerung 13 kommunikativ verbunden sind, gezeigt. Der Fachmann erkennt, dass die Aufzugsanlage 1 auch mehrere Kabinen 10 in einem oder mehreren Schächten 18 umfassen kann, die von einer Gruppensteuerung gesteuert werden. Anstelle eines in Fig. 1 dargestellten Traktionsaufzuges kann die Aufzugsanlage 1 auch einen oder mehrere Hydraulikaufzüge aufweisen.

Im hier beschriebenen Ausführungsbeispiel der Aufzugsanlage 1 gibt der Passagier P auf einem der Stockwerke L1, L2 an einer dort angeordneten Aufzugbedieneinrichtung 6 einen Fahrtwunsch ein, wodurch ein Aufzugsruf registriert wird. Das Stockwerk L1, L2, auf dem sich der Passagier P befindet und vom dem aus er auf ein Zielstockwerk transportiert werden möchte, ist im Folgenden auch als Einsteigestockwerk bezeichnet. Wie an anderer Stelle dieser Beschreibung detaillierter ausgeführt, kann der Passagier P zur Rufeingabe ein Rufsymbol (23, 24, 26) berühren, woraufhin dem Passagier P die Registrierung des Aufzugsrufs an der Aufzugbedieneinrichtung 6 bestätigt wird. Die Aufzugssteuerung 13 stellt daraufhin auf dem Einsteigestockwerk eine Aufzugskabine 10 zum Einsteigen zur Verfügung, d. h., wenn sich die Aufzugskabine 10 nicht auf dem Einsteigestockwerk befindet, wird sie dorthin verfahren und ihre Aufzugstür wird geöffnet, andernfalls wird lediglich die Aufzugstür der dort bereits stehenden Aufzugskabine 10 geöffnet. In der Aufzugskabine 10 kann der Passagier P dann an einer darin angeordneten Kabinenrufeinrichtung 4 ein gewünschtes Zielstockwerk eingeben. Die Kabinenrufeinrichtung 4 ist mittels einer Kommunikationsleitung 20 mit der Aufzugssteuerung 13 verbunden.

Die Aufzugssteuerung 13 besteht gemäss dem in Fig. 1 gezeigten Ausführungsbeispiel aus zwei Teilsystemen, einem Steuerungssystem 8 und einem Gruppensteuerungssystem 12. Das Steuerungssystem 8 steuert das Verfahren der Aufzugskabine 10, während das Gruppensteuerungssystem 12 aus einer Gruppe von Aufzügen bzw. Aufzugskabinen 10 die "beste" Aufzugskabine 10 ermittelt. Aus Darstellungsgründen zeigt Fig. 1 jedoch nur eine Aufzugskabine 10 bzw. einen Aufzug. Das Gruppensteuerungssystem 12 prüft beispielsweise, welcher Aufzug verfügbar ist und/oder welcher Aufzug sich am nächsten zum Einsteigestockwerk befindet. Dieses Vorgehen ist dem Fachmann bekannt, so dass weitergehende Ausführungen hierzu nicht erforderlich erscheinen. Das Steuerungssystem 8 steuert die Antriebsmaschine 14 u. a. so an, dass die zugeteilte Aufzugskabine 10 mit dem Passagier P vom Einsteigestockwerk auf das Zielstockwerk verfahren wird. Der Fachmann erkennt, dass in einem Ausführungsbeispiel mit mehreren Aufzügen jeder Aufzug ein Steuerungssystem 8 hat und dass in einem Ausführungsbeispiel mit nur einem Aufzug das Gruppensteuerungssystem 12 entfallen kann.

Gemäss dem in Fig. 1 gezeigten Ausführungsbeispiel ist auf jedem Stockwerk L1, L2 eine Aufzugsbedieneinrichtung 6 angeordnet, wobei jede über das Kommunikationsnetzwerk 22 kommunikativ mit der Aufzugssteuerung 13 verbunden ist.

In einem Ausführungsbeispiel hat jede Aufzugsbedieneinrichtung 6 ein Gehäuse, das z. B. an oder ganz oder teilweise in einer Gebäudewand im Zugangangsbereich zu einer stockwerkseitigen Aufzugstür (Aufzugsschachttür) angeordnet ist. In einem Ausführungsbeispiel werden die Aufzugsbedieneinrichtungen 6 über das Kommunikationsnetzwerk 22 mit elektrischer Energie versorgt, beispielsweise mittels einer als Power over Ethernet (PoE) bekannten Technologie.

Die Aufzugsanlage 1 kann sich in einem Normalbetriebsmodus oder einem Ausnahmebetriebsmodus befinden. Im Normalbetriebsmodus liegen in der Aufzugsanlage 1 keine Störungen oder Einschränkung vor und Passagiere werden gemäss ihren Transportwünschen befördert. Der Normalbetriebsmodus umfasst auch den Betrieb während Zeiten mit hohem oder geringem Passagieraufkommen. Im Ausnahmebetriebsmodus liegen dagegen Störungen oder Einschränkungen vor, die anlagenbedingt oder gebäudebedingt sein können. In der Aufzugsanlage 1 können z. B. eine Reparatur oder eine Wartung erforderlich sein. In diesem Fall schaltet beispielsweise ein Techniker die Aufzugsanlage 1 in einen Wartungsmodus, in dem die Aufzugsanlage 1 aus Passagiersicht ganz oder teilweise ausser Betrieb ist. In einem Ausführungsbeispiel steuert die Aufzugssteuerung 13 die Aufzugsbedieneinrichtungen 6 mit einem Steuersignal an, damit diese die Nichtverfügbarkeit der Aufzugsanlage 1 signalisieren. Eine gebäudebedingte Störung liegt beispielsweise vor, wenn im Gebäude 2 eine Gefahrenmeldung, beispielsweise eine Brandmeldung vorliegt. Die Brandmeldung kann z. B. von einem Gebäudemanagementsystem übermittelt werden. In diesem Fall gilt üblicherweise die Anweisung, den Aufzug nicht zu benutzen und die Aufzugsanlage 1 kann ganz oder teilweise ausser Betrieb sein. Auch in diesem Fall steuert die Aufzugssteuerung 13 gemäss einem Ausführungsbeispiel die Aufzugsbedieneinrichtungen 6 mit einem Steuersignal an, damit diese die Nichtverfügbarkeit der Aufzugsanlage 1 signalisieren. Liegen keine Störungen oder Einschränkung vor, steuert die Aufzugssteuerung 13 die Aufzugsbedieneinrichtungen 6 gemäss dem Normalbetriebsmodus an.

Fig. 2 zeigt eine schematische Darstellung einer beispielhaften Benutzeroberfläche 34 einer Aufzugsbedieneinrichtung 6, die in der Aufzugsanlage 1 gemäss Fig. 1 auf einem Stockwerk L1, L2 angeordnet ist. Die Aufzugsanlage 1 befindet sich dabei im Normalbetriebsmodus, wobei die Aufzugssteuerung 13 die Aufzugsbedieneinrichtung 6 mit dem entsprechenden Steuersignal ansteuert. Die Aufzugsbedieneinrichtung 6 umfasst ein berührungsempfindliches Bildschirmsystem mit einem berührungsempfindlichen (Sensor) Bildschirm (im Folgenden auch als Touchscreen bezeichnet), der die Benutzeroberfläche 34 erzeugt und für den Passagier P sichtbar darstellt. Die Benutzeroberfläche 34 stellt eine graphische Benutzerschnittstelle (GUI) dar und erlaubt eine Kommunikation zwischen dem Passagier P und der Aufzugsanlage 1. Der Passagier P kann beispielsweise ein dargestelltes graphisches Symbol oder Steuerelement durch Berührung auswählen, um beispielsweise die Fahrtrichtung zu wählen. Berührt der Passagier P das ausgewählte Symbol, bestätigt die Aufzugsanlage 1 bzw. die Aufzugsbedieneinrichtung 6 diese Berührung dem Passagier P.

Im in Fig. 2 gezeigten Ausführungsbeispiel zeigt die Benutzeroberfläche 34 ein Fahrtrichtungssymbol 24 für die Aufwärtsrichtung und ein Fahrtrichtungssymbol 26 für die Abwärtsrichtung an. Die Aufwärtsrichtung ist durch ein nach oben zeigendes Dreieck symbolisiert, und die Abwärtsrichtung ist durch ein nach unten zeigendes Dreieck symbolisiert. Derartige Fahrtrichtungssymbole 24, 26 zeigt in Fig. 1 die auf dem Stockwerk L2 angeordnete Aufzugsbedieneinrichtung 6 an. Alternativ zu diesen dreieckförmigen Richtungssymbolen 24, 26 können auch andersartig gestaltete Richtungssymbole dargestellt werden, z. B. nach oben bzw. nach unten zeigende Pfeilsymbole. Zudem können die Fahrtrichtungssymbole 24, 26 durch Text ergänzt sein.

In Fig. 1 zeigt die auf dem Stockwerk L1 angeordnete Aufzugsbedieneinrichtung 6 lediglich ein Rufsymbol 23 an. Das Rufsymbol 23 ist beispielsweise rechteckförmig, es kann aber auch eine andere Form haben, z. B. rund oder oval. Berührt der Passagier P dieses Rufsymbol 23, wird dadurch ein Aufzugsruf veranlasst, d. h. ein Verfahren der Kabine 10 auf das Einsteigestockwerk (L1), ohne dass dabei Information zur vom Passagier P gewünschten Fahrtrichtung mitgeteilt wird. Der Fachmann erkennt, dass im Gebäude 2 alle Aufzugsbedieneinrichtungen 6 das Rufsymbol 23 anzeigen können. Alternativ dazu können alle Aufzugsbedieneinrichtungen 6 die Rufsymbole 24, 26 anzeigen. Der Fachmann erkennt zudem, dass eine Aufzugsbedieneinrichtung 6 auf einem Zwischenstockwerk zwei Fahrtrichtungssymbole 24, 26 (bzw. Fahrtrichtungstasten) aufweisen kann, eine für eine Fahrt nach unten und eine für eine Fahrt nach oben, während auf einem untersten bzw. auf einem obersten Stockwerk jeweils nur ein Fahrtrichtungssymbol 24, 26 (nach oben bzw. nach unten) angezeigt werden kann). Der Fachmann erkennt auch, dass im Gebäude 2 eine oder mehrere Aufzugsbedieneinrichtungen 6 das Rufsymbol 23 anzeigen können, während andere die Fahrtrichtungssymbole 24, 26 anzeigen können. Im Folgenden erfolgt die Beschreibung der Technologie mit Bezug auf die Fahrtrichtungssymbole 24, 26.

Die Benutzeroberfläche 34 hat in einem Ausführungsbeispiel eine Grösse, z. B. angegeben als Breite und Länge (bzw. Höhe) oder als Bildschirmdiagonale, die von der (physischen) Grösse des Touchscreens abhängen kann. Die Bildschirmdiagonale kann z. B. zwischen ca. 4 und ca. 24 Zoll betragen. In einem anderen Ausführungsbeispiel kann die Grösse der Benutzeroberfläche 34 auch davon abhängen, welche Fläche oder welcher Anteil des Touchscreens als nutzbare Fläche (zur Berührung und/oder Informationsdarstellung) festgelegt ist. Der Fachmann erkennt, dass die Grösse der Benutzeroberfläche 34 entsprechend den für das Gebäude 2 festgelegten Anforderungen gewählt sein kann. Sollen im Normalbetriebsmodus beispielsweise lediglich die Fahrtrichtungssymbole 24, 26 in für die Bedienung ausreichender Grösse angezeigt werden, kann die Grösse der Benutzeroberfläche 34 dementsprechend gewählt werden, d. h. es kann ein relativ kleiner Touchscreen verwendet werden.

Wie in Fig. 2 angedeutet, kann die Grösse der Benutzeroberfläche 34 auch so gewählt werden, dass zusätzliche Felder und/oder Symbole angezeigt werden können, z. B. Informationsfelder 30, 32 und ein Audiosymbol 28. Als optionale Felder und Symbole sind diese in Fig. 2 gestrichelt dargestellt. Die zusätzlichen Felder und/oder Symbole sind je nach Anforderungen im Gebäude 2 auf der Benutzeroberfläche 34 positionierbar und dimensionierbar, d. h. es kann festgelegt werden, wo und in welcher Grösse sie angezeigt werden; Entsprechendes gilt für die Form und Anzahl der zusätzlichen Felder und/oder Symbole. Der Fachmann erkennt, dass die Fahrtrichtungssymbole 24, 26 und die zusätzlichen Felder und/oder Symbole benutzergerecht graphisch gestaltet sein können, beispielsweise können die Fahrtrichtungssymbole 24, 26 als Tasten oder Druckknöpfe dargestellt werden, um eine intuitive Bedienung zu ermöglichen. Drückt der Passagier P eine dieser Fahrtrichtungssymbole 24, 26, wird diese gedrückte Taste in einem Ausführungsbeispiel durch einen Lichteffekt gekennzeichnet.

Das Audiosymbol 28 kann z. B. ein Symbol für einen Lautsprecher sein, der in der Aufzugsbedieneinrichtung 6 angeordnet ist. Das Informationsfeld 30 kann beispielsweise den Aufzug anzeigen, der den Ruf bedient, die Wartezeit bis zur Ankunft des Aufzugs, eine Bewegungsrichtung des Aufzugs, oder einen Indikator, der die Belegung des Aufzugs angibt. Das Informationsfeld 30 kann auch genutzt werden, um stockwerkspezifische und/oder gebäudespezifische Information anzuzeigen. Beispielsweise kann im Informationsfeld 30 angezeigt werden, dass sich auf einem bestimmten Stockwerk die Praxis- oder Büroräume eines Dienstleisters (Arzt, Zahnarzt, Anwalt) befinden. Bei Bedarf kann im Informationsfeld 30 beispielsweise angezeigt werden, wann eine geplante Aufzugswartung erfolgt oder dass ein Stockwerk momentan gesperrt ist. Das Informationsfeld 32 kann beispielsweise das Stockwerk L1, L2 anzeigen, auf dem die Aufzugsbedieneinrichtung 6 angeordnet ist. Dies erleichtert einem Passagier P beispielsweise die Orientierung im Gebäude 2.

Fig. 3 zeigt eine schematische Darstellung einer beispielhaften Benutzeroberfläche 34 der Aufzugsbedieneinrichtung 6; die Aufzugsanlage 1 befindet sich dabei im Ausnahmebetriebsmodus, wobei die Aufzugssteuerung 13 die Aufzugsbedieneinrichtung 6 mit dem entsprechenden Steuersignal ansteuert. In diesem Ausnahmebetriebsmodus zeigt die Benutzeroberfläche 34 nicht mehr die in Fig. 2 gezeigten Fahrtrichtungssymbole 24, 26 oder das in Fig. 1 gezeigte Rufsymbol 23 an, sondern informiert darüber, dass die Aufzugsanlage 1 zurzeit nicht nutzbar ist. Diese Information erfolgt mittels einer Ausnahmebetriebsmeldung. Gemäss dem in Fig. 3 gezeigten Ausführungsbeispiel umfasst die Ausnahmebetriebsmeldung ein Hinweissymbol 36. Das Hinweissymbol 36 kann die Bedeutung eines Verbots- oder Warnsymbols haben und beispielsweise darauf hinweisen, dass der Aufzug wegen eines Brands, eines Erdbebens oder einer anderen Gefahrensituation nicht nutzbar ist. Das Hinweissymbol 36 kann durch Text und/oder zusätzliche Symbole ergänzt werden. In einem anderen Ausführungsbeispiel kann die Ausnahmebetriebsmeldung ein Bild, Text (ein oder mehrere Wörter) oder eine Kombination aus Bild und Text erfolgen, beispielsweise kann angegeben sein, dass die Aufzugsanlage 1 zurzeit gewartet wird; dabei kann ein voraussichtliches Ende der Wartung, ein Bild des Technikers und/oder eine Kontaktinformation des Technikers angezeigt werden.

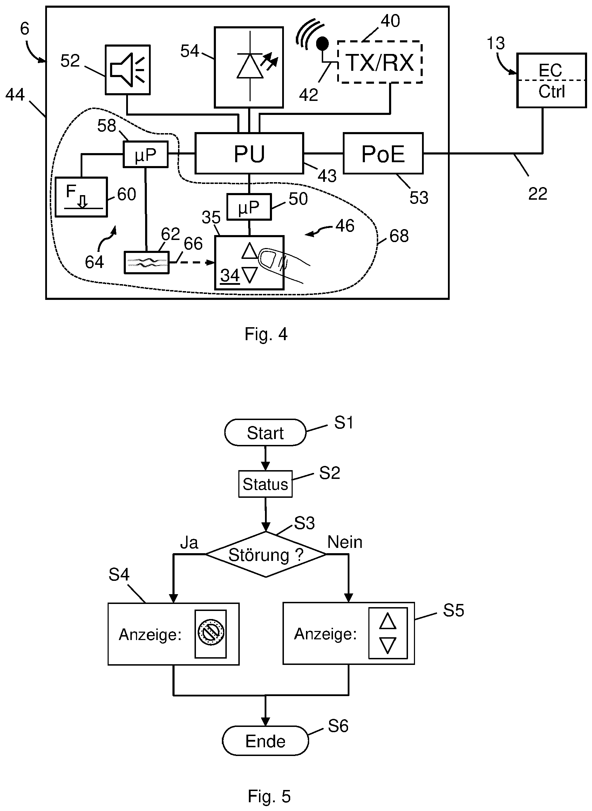

In der in Fig. 1 gezeigten Situation ist die hier beschriebene Technologie in vorteilhafter Weise anwendbar. Kurz und beispielhaft zusammengefasst wird durch die hier beschriebene Technologie eine Aufzugsanlage 1 geschaffen, in der die typischerweise auf den Stockwerken vorhandenen elektromechanischen Drucktasten oder Druckknöpfe durch Aufzugsbedieneinrichtungen 6 ersetzt sind, die jeweils ein berührungsempfindliches, mit einer im Wesentlichen planaren Berührungsfläche 35 ausgestattetes Bildschirmsystem 68 (s. Fig. 4) haben. Berührt ein Passagier P zur Eingabe eines Aufzugsrufs ein Rufsymbol (23, 24, 26), reagiert das Bildschirmsystem 68 mit einer taktil wahrnehmbaren Rückmeldung. In einem Ausführungsbeispiel kann zudem eine akustisch wahrnehmbare Rückmeldung erzeugt werden. Obwohl das Rufsymbol 23 oder die Fahrtrichtungssymbole 24, 26 für einen Passagier P mit einer eingeschränkten Sehfähigkeit nicht oder nur schlecht sichtbar und auf der glatten Berührungsfläche 35 auch nicht fühlbar sind, wird dieser Passagier P bei der Rufeingabe unterstützt. Passagiere P ohne eine solche Einschränkung können das angezeigte Rufsymbol 23 oder die angezeigten Fahrtrichtungssymbole 24, 26 erkennen und damit in gewohnter Weise Rufe eingeben.

Fig. 4 zeigt eine schematische Darstellung einer beispielhaften Aufzugsbedieneinrichtung 6, die in der Aufzugsanlage gemäss Fig. 1 auf einem Stockwerk L1, L2 angeordnet ist. Die Aufzugsbedieneinrichtung 6 ist über das Kommunikationsnetzwerk 22 mit der Aufzugssteuerung 13 kommunikativ verbunden. Die Aufzugsbedieneinrichtung 6 umfasst eine Trägervorrichtung 44, an der im Folgenden angegebene Komponenten angeordnet sind. In einem Ausführungsbeispiel ist die Trägervorrichtung 44 als Gehäuse ausgestaltet, wodurch die Aufzugsbedieneinrichtung 6 an einer Gebäudewand oder auf dem Boden stehend angeordnet werden kann. Der Fachmann erkennt, dass ein solches Gehäuse u. U. nicht erforderlich ist, wenn die Aufzugsbedieneinrichtung 6 ganz oder teilweise in eine Gebäudewand oder einen Türrahmen einer stockwerkseitigen Aufzugstür eingebaut ist. Der Fachmann erkennt zudem, dass die Aufzugsbedieneinrichtungen 6 in einer benutzergerechten oder durch eine Norm vorgeschriebenen Höhe angeordnet sind. In der folgenden Beschreibung der Technologie ist die Trägervorrichtung 44 als Gehäuse ausgestaltet und als "Gehäuse 44" bezeichnet.

Am Gehäuse 44 der Aufzugsbedieneinrichtung 6 sind im gezeigten Ausführungsbeispiel das Bildschirmsystem 68 mit einem Touchscreen 46, eine Kommunikationseinrichtung 53 (PoE) und eine Beleuchtungseinrichtung 54 angeordnet. Der Touchscreen 46 hat in einem Ausführungsbeispiel eine transparente Glasabdeckung, die das Gehäuse 44 nach aussen bzw. nutzerseitig verschliesst. Die äussere Oberfläche der Glasabdeckung stellt eine Berührungsfläche 35 dar, die der Passagier P beispielsweise bei der Rufeingabe berührt. Der Fachmann erkennt, dass die Glasabdeckung eine planare oder gekrümmte Glasplatte aufweisen kann. Unabhängig von der konkreten Form der Glasabdeckung fühlt sich deren äussere Oberfläche für den Passagier P glatt an, d. h. sie hat beispielsweise keine Erhöhungen, Vertiefungen, Aufrauhungen oder Braille Markierungen.

Die am Gehäuse 44 angeordneten Komponenten dienen zur Darstellung der Benutzeroberfläche 34, der Kommunikation (einschliesslich Energieversorgung) und der Beleuchtung. Ein elektroakustischer Wandler 52 (z. B. ein Lautsprecher) kann vorgesehen sein, insbesondere in Verbindung mit dem Audiosymbol 28, um eine akustische Rückmeldung (Sprachmitteilung), z. B. beim Berühren des Touchscreens 46, zu erzeugen. Der Touchscreen 46 umfasst einen Prozessor 50 und die Benutzeroberfläche 34, auf der in Fig. 4 zwei dreieckförmige Symbole für die Fahrtrichtungen illustriert sind. Der Prozessor 50 ist mit einer zentralen Steuer- und Verarbeitungseinrichtung 43 (PU) verbunden und kommuniziert beispielsweise mit der Aufzugssteuerung 13 und detektiert ein Signal, wenn ein Passagier P die Berührungsfläche 35 mit einem Finger berührt.

Die Beleuchtungseinrichtung 54 dient dazu, die Benutzeroberfläche 34 der Aufzugsbedieneinrichtung 6, oder lediglich Bereiche der Benutzeroberfläche 34, zu beleuchten. Gesteuert von der zentralen Steuer- und Verarbeitungseinrichtung 43 kann die Beleuchtungseinrichtung 54 die Benutzeroberfläche 34 ausleuchten, damit die angezeigten Fahrtrichtungssymbole 24, 26 und die evtl. angezeigten Informationsfelder 30, 32 von einem Passagier P wahrnehmbar sind, insbesondere bei schlechten Lichtverhältnissen. Die Beleuchtungseinrichtung 54 kann die Benutzeroberfläche 34 bzw. einzelne durch die Fahrtrichtungssymbole 24, 26 und die Informationsfelder 30, 32 auch mit farbigem Licht beleuchten, um dem Passagier P beispielsweise die Eingabe eines Aufzugsrufs zu bestätigen. In einem Ausführungsbeispiel umfasst die Beleuchtungseinrichtung 54 eine oder mehrere LED Lichtquellen.

In einem Ausführungsbeispiel der Aufzugsbedieneinrichtung 6 ist der Touchscreen 46 mit einer Rückmeldungseinrichtung 64 kombiniert, woraus sich das berührungsempfindliche Bildschirmsystem 68 ergibt. Zur Illustration ist das Bildschirmsystem 68 in Fig. 2 gestrichelt umrandet; der Fachmann erkennt, dass diese Umrandung beispielhaft ist und mehr oder weniger Komponenten als zum Bildschirmsystem 68 gehörend aufgefasst werden können. Durch die Rückmeldungseinrichtung 64 wird die Wirkungsweise der Benutzeroberfläche 34 modifiziert, wodurch eine unterstützte Bedienung mittels taktil wahrnehmbarer Rückmeldung ermöglicht wird. Wird die Benutzeroberfläche 34 mit ausreichender Druckkraft an einer Stelle berührt, erfolgt auf diese Berührung hin eine taktil wahrnehmbare Rückmeldung. Je nach Ausgestaltung kann die taktil wahrnehmbare Rückmeldung von einem Vibrationsgeräusch und/oder einer Sprachmitteilung begleitet sein, wofür der elektroakustische Wandler 52 vorgesehen ist. Ein aus einer solchen Kombination eines Touchscreens und einer durch Berührung geführten Bedienoberfläche geschaffenes taktiles Feedback-Modul ist beispielsweise von der Firma next system Vertriebsgesellschaft, Wien, Österreich, erhältlich.

Die in Fig. 4 gezeigte Rückmeldungseinrichtung 64 umfasst eine Kraftmesseinrichtung 60 (z. B. in Gestalt einer dünnen Schicht kapazitiver Drucksensoren), einen Aktuator 62 und eine Steuereinrichtung 58, die mit der Kraftmesseinrichtung 60 und dem Aktuator 62 verbunden ist. Die Kraftmesseinrichtung 60 misst in Verbindung mit der Steuereinrichtung 58 die Kraft, mit der der Passagier P auf die Berührungsfläche 35 bzw. die Bedienoberfläche 34 des Touchscreens 46 drückt. Die Kraftmesseinrichtung 60 erfasst kleinste Veränderungen eines Abstandes zwischen der (biegsamen) Glasplatte und der dünnen Schicht kapazitiver Drucksensoren bzw. einer darunterliegenden Schicht. In einem Ausführungsbeispiel ist die Steuereinrichtung 58 so konfiguriert, dass sie die gemessene Kraft erst dann als Auslösekraft registriert, wenn die gemessene Kraft einen festgelegten Schwellwert erreicht; erst dann wird die Berührung als bewusstes Drücken bzw. als bewusste Eingabe gewertet.

Der Aktuator 62 umfasst in einem Ausführungsbeispiel zwei Elektrodenplatten, wobei eine erste Elektrodenplatte als leitendendes Gitter ausgebildet und mit der Glasabdeckung starr verbunden ist und wobei eine zweite Elektrodenplatte mit dem Touchscreen 46 zu gemeinsamer Bewegung verbunden ist. Ein Rückstellelement hält die Elektrodenplatten in einem gewünschten Abstand. Eine solche Anordnung kann als elektrostatischer Parallelplatten-Aktuator bezeichnet werden. Steuert die Steuereinrichtung 58 den Aktuator 62 durch Anlegen einer Spannung, deren Parameter wie z. B. Spannung, Frequenz, steigende und fallende Flanken festgelegt werden können, an (z. B. nach Überschreiten der Auslösekraft), bewegen sich die Elektrodenplatten entgegen einer vom Rückstellelement ausgeübten Kraft relativ zueinander; entsprechend dazu bewegt sich die Glasabdeckung, wodurch die taktil wahrnehmbare Rückmeldung erzeugt wird. Die Wirkung des Aktuators 62 auf die Berührungsfläche 35 ist in Fig. 4 durch einen Pfeil 66 angedeutet.

Je nach Ausgestaltung der Aufzugsbedieneinrichtung 6 kann am Gehäuse 44 eine Leseeinrichtung 40 für einen Berechtigungsnachweis eines Passagiers P angeordnet sein. Die Leseeinrichtung 40 kann beispielsweise vorhanden sein, wenn sich der Passagier P zuerst als berechtigt ausweisen muss, bevor die Aufzugsbedieneinrichtung 6 für die Rufeingabe freigegeben werden kann. Der Berechtigungsnachweis kann beispielsweise in Form eines physischen Schlüssels, eines manuell eingegebenen Kennworts (z. B. ein PIN Code), eines biometrischen Merkmals (z. B. Fingerabdruck, Irismuster, Sprach/Stimmcharakteristika) oder eines von einer Magnet-, Chip- oder RFID Karte oder einem elektronischen Gerät (NFC-, Bluetooth- oder Mobilfunk-basiert) erfassten Zugangsodes erfolgen. Der Passagier P weist den Berechtigungsnachweis vor, wenn er die gewünschte Fahrtrichtung eingeben möchte. Die Leseeinrichtung 40 ist entsprechend dem in der Aufzugsanlage 1 vorgesehen Berechtigungsnachweis ausgestaltet. Das heisst, die Leseeinrichtung 40 hat beispielsweise einen Schlüsselzylinder, ein Erfassungsgerät für ein biometrisches Merkmal, ein Erfassungsgerät für einen optischen Code, ein Lesegerät für eine Magnetstreifenkarte oder eine Chipkarte, eine Tastatur oder einen berührungsempfindlichen Bildschirm zur manuellen Eingabe eines Kennworts oder eine Sende- und Empfangseinrichtung für Funksignale.

Der von der Leseeinrichtung 40 erfasste Berechtigungsnachweis wird an die Aufzugssteuerung 13 weitergeleitet, die die Prüfung der Berechtigung durchführt oder veranlasst, beispielsweise durch Prüfung, ob der erfasste Berechtigungscode in einer Datenbank einem berechtigten Passagier zugeordnet ist. Die Prüfung kann beispielsweise durch eine Zugangskontrollfunktion der Aufzugsanlage 1 oder eines Zugangskontrollsystems erfolgen. Ist der Passagier P zugangsberechtigt, kann die Aufzugsbedieneinrichtung 6 freigegeben werden.

Im in Fig. 4 gezeigten Ausführungsführungsbeispiel ist das Lesegerät 40 eine Sende- und Empfangseinrichtung für Funksignale (TX/RX) mit einer Antenne 42. Das Lesegerät 40 ist im Folgenden auch als Sende- und Empfangseinrichtung 40 für Funksignale bezeichnet (als optionale Komponente ist die Sende- und Empfangseinrichtung 40 gestrichelt eingezeichnet). Die Sende- und Empfangseinrichtung 40 kann ein RFID Lesegerät oder ein Funkmodul, das mit einem tragbaren Kommunikationsgerät (z. B. Mobilfunkgerät/Mobiltelefon, Smartphone, Tablet PC) eines Passagiers P kommuniziert, umfassen, um die Rufeingabe zu ermöglichen. Alternativ zur Sende- und Empfangseinrichtung für Funksignale 40 oder zusätzlich kann ein Lesegerät für einen vom Passagier P präsentierten optischen Code (z. B. Strichcode, QR Code oder Farbcode) vorhanden sein.

Das Kommunikationsnetzwerk 22 verbindet die Aufzugsbedieneinrichtungen 6 mit der Aufzugssteuerung 13 und ermöglicht dadurch eine Kommunikation zwischen der Aufzugssteuerung 13 und den Aufzugsbedieneinrichtungen 6. Für diese Kommunikation können die Aufzugsbedieneinrichtungen 6 und die Aufzugssteuerung 13 direkt oder indirekt mit dem Kommunikationsnetzwerk 22 verbunden sein. Das Kommunikationsnetzwerk 22 kann ein Kommunikationsbussystem, einzelne Datenleitungen oder eine Kombination daraus umfassen. Je nach Implementierung des Kommunikationsnetzwerkes 22 können der Aufzugssteuerung 13 und jeder Aufzugsbedieneinrichtung 6 individuelle Adressen und/oder Kennungen zugeteilt sein, so dass beispielsweise die Aufzugssteuerung 13 eine Nachricht gezielt an eine gewünschte Aufzugsbedieneinrichtung 6 senden kann. Die Kommunikation kann gemäss einem Protokoll für leitungsgebundene Kommunikation, beispielsweise dem Ethernet Protokoll, erfolgen. Wie erwähnt erfolgt in einem Ausführungsbeispiel die Versorgung der Aufzugsbedieneinrichtungen 6 mit elektrischer Energie über das Kommunikationsnetzwerk 22 (PoE).

In einem Ausführungsbeispiel ist die zentrale Steuer- und Verarbeitungseinrichtung 43 ausgestaltet, die Aufzugsbedieneinrichtung 6 in einen inaktiven Zustand zu versetzen, um ihren Verbrauch an elektrischer Energie zu reduzieren. In diesem Bereitschafts- oder Energiesparzustand schaltet die Steuer- und Verarbeitungseinrichtung 43 z. B. die Beleuchtungseinrichtung 54 aus; die Benutzeroberfläche 34 erscheint daraufhin in einem Ausführungsbeispiel als dunkle (schwarze) Fläche. Das Ausschalten kann erfolgen, wenn sich für eine eingestellte Zeitdauer kein Passagier an oder in der Nähe der Aufzugsbedieneinrichtung 6 aufgehalten hat. Dafür kann in der Aufzugsbedieneinrichtung 6 ein Sensor (in Fig. 4 nicht gezeigt) vorhanden sein, der eine Anwesenheit und/oder eine Bewegung eines Passagiers detektiert. Der Sensor kann ein Bewegungssensor sein, der gemäss einem von bekannten Funktionsprinzipien arbeitet, z. B. aktiv mit elektromagnetischen Wellen (HF, Mikrowellen oder Dopplerradar), mit Ultraschall (Ultraschall-Bewegungsmelder) oder passiv anhand von Infrarotstrahlung (PIR-Sensor, Pyroelectric Infrared Sensor) der Umgebung. Befindet sich die Aufzugsbedieneinrichtung 6 im Energiesparzustand und detektiert der Bewegungssensor die Anwesenheit eines Passagiers P, wechselt die zentrale Steuer- und Verarbeitungseinrichtung 43, die Aufzugsbedieneinrichtung 6 in einen aktiven Zustand, in dem beispielsweise die Fahrtrichtungssymbole 24, 26 angezeigt werden.

Der Fachmann erkennt, dass der Passagier P an der Kabinenrufeinrichtung 4 in der Aufzugskabine 10 das Zielstockwerk eingeben kann. Die Kabinenrufeinrichtung 4 kann dafür gemäss einer von mehreren bekannten Technologien (z. B. elektromechanische Drucktaster für die Zielstockwerke oder entsprechende Felder ("Taster") auf einem Touchscreen) ausgestaltet sein. In einem Ausführungsbeispiel ist die Kabinenrufeinrichtung 4 analog zur Technologie der Aufzugsbedieneinrichtungen 6 mit einem berührungsempfindlichen Bildschirmsystem und einer Rückmeldungseinrichtung ausgestattet. Wie oben ausgeführt, unterstützt die Rückmeldeeinrichtung die Bedienung mittels einer taktil wahrnehmbaren Rückmeldung.

Mit dem Verständnis der oben beschriebenen Aufzugsanlage 1 und deren prinzipiellen Systemkomponenten und Funktionalitäten, erfolgt im Folgenden anhand von Fig. 5 eine Beschreibung eines nicht beanspruchten beispielhaften Verfahrens zum Betreiben der in Fig. 1 gezeigten Aufzugsanlage 1. Fig. 5 zeigt ein nicht beanspruchtes beispielhaftes Ablaufdiagramm des Verfahrens, es beginnt in einem Schritt S1 und endet in einem Schritt S6. Der Fachmann erkennt, dass die Aufteilung in diese Schritte beispielhaft ist und dass einer oder mehrere dieser Schritte in einen oder mehrere Teilschritte aufgeteilt oder dass mehrere der Schritte zu einem Schritt zusammengefasst werden können.

Die Beschreibung des Verfahrens erfolgt mit Bezug auf einen Passagier P mit einer der genannten körperlichen Einschränkungen. Dabei ist angenommen, dass sich der Passagier P auf einem Stockwerk L1, L2 in Griffweite zu einer dort angeordneten Aufzugsbedieneinrichtung 6 befindet und an ihr einen Aufzugsruf eingeben möchte, um einen Aufzug auf dieses Stockwerk L1, L2 zu rufen. Die Aufzugsanlage 1 ist in diesem Ausführungsbeispiel so ausgestaltet, dass die Aufzugsbedieneinrichtung 6 die Fahrtrichtungssymbole 24, 26 anzeigt. Jede Aufzugsbedieneinrichtung 6 ist aktiviert, d. h. sie befindet sich nicht im Energiesparzustand.

In einem Schritt S2 ermittelt das Verfahren, welchen Status die Aufzugsanlage 1 hat. In einem Ausführungsbeispiel liegt diese Statusinformation in der Aufzugssteuerung 13 vor. Die Aufzugsanlage 1 kann sich im Normalbetriebsmodus befinden oder im Ausnahmebetriebsmodus. Der Ausnahmebetriebsmodus wird beispielsweise erkannt, wenn ein Techniker den Wartungsmodus aktiviert hat oder wenn das Gebäudemanagementsystem eine Brandmeldung übermittelt hat.

In einem Schritt S3 fragt das Verfahren diese Statusinformation ab. Befindet sich die Aufzugsanlage 1 im Ausnahmebetriebsmodus, stellt dies in der Aufzugsanlage 1 eine Betriebsstörung dar und die Aufzugssteuerung 13 steuert die Aufzugsbedieneinrichtungen 6 mit einem entsprechenden Steuersignal an. In diesem Fall schreitet das Verfahren entlang dem Ja-Zweig zu einem Schritt S4. Liegt dagegen keine Störung vor, befindet sich die Aufzugsanlage 1 im Normalbetriebsmodus und das Verfahren schreitet entlang dem Nein-Zweig zu einem Schritt S5. Auch in diesem Fall steuert die Aufzugssteuerung 13 die Aufzugsbedieneinrichtungen 6 mit einem entsprechenden Steuersignal an.

Im Schritt S4 veranlasst das Verfahren die Anzeige der Ausnahmebetriebsmeldung. Wie in Verbindung mit Fig. 3 ausgeführt, kann die Ausnahmebetriebsmeldung ein Hinweissymbol 36 umfassen, das die Bedeutung eines Verbots- oder Warnsymbols hat. Im Schritt S5 veranlasst das Verfahren die Anzeige der Fahrtrichtungssymbole 24, 26. Die in den Schritten S4 und S5 angezeigten Symbole (24, 26, 36) werden jeweils solange angezeigt, bis sich der jeweilige Status ändert. Das Verfahren endet im Schritt S6.

Befindet sich die Aufzugsanlage 1 im Normalbetriebsmodus, kann ein Passagier P durch Eingabe der gewünschten Fahrtrichtung einen Aufzug rufen. Dafür berührt der Passagier P die Berührungsfläche 35 an der Stelle, an der die Benutzeroberfläche 34 das gewünschte Fahrtrichtungssymbol 24, 26 anzeigt. Die Steuereinrichtung 50 des Touchscreens 46 erkennt, an welcher Stelle die Berührung erfolgt und welchem Symbol (24, 26) diese Stelle zugeordnet ist. Die zentrale Steuer- und Verarbeitungseinrichtung 43 steuert daraufhin den elektroakustischen Wandler 52 an, eine Sprachmitteilung zu erzeugen, die die dieser Stelle zugeordnete Fahrtrichtung angibt. Gleichzeitig dazu wird durch den Aktuator 62 eine taktil wahrnehmbare Rückmeldung erzeugt. Berührt der Finger beispielsweise das (aufwärts) Fahrtrichtungssymbol 24 werden die taktil wahrnehmbare Rückmeldung und die Sprachmitteilung "nach oben" (oder eine sinngemäss andere Formulierung der Richtungsangabe) erzeugt. Befindet sich der Finger am gewünschten Fahrtrichtungssymbol 24, 26, kann der Passagier an dieser Stelle die Druckkraft erhöhen, welches die Kraftmesseinrichtung 60 erkennt, um die Fahrtrichtung einzugeben.

Wie in Verbindung mit Fig. 2 erläutert, kann die Benutzeroberfläche 34 zusätzliche Felder und/oder Symbole (28, 30, 32) anzeigen. Das Berühren dieser Felder und/oder Symbole wird in einem Ausführungsbeispiel ebenfalls durch eine taktil wahrnehmbare Rückmeldung und eine Sprachmitteilung bestätigt. Beispielsweise kann das Informationsfeld 30 in einem Ausführungsbeispiel genutzt werden, um stockwerkspezifische und/oder gebäudespezifische Information anzuzeigen, beispielsweise kann im Informationsfeld 30 angezeigt werden, dass sich auf einem bestimmten Stockwerk die Büroräume eines Anwalts befinden. Berührt der Passagier P das Informationsfeld 30 werden zuerst die taktil wahrnehmbare Rückmeldung und eine dem Informationsfeld 30 entsprechende Sprachmitteilung erzeugt. Erhöht der Passagier P daran anschliessend die Druckkraft, wird dies als Fahrtwunsch in Richtung des Stockwerks gewertet. Eine zusätzliche Eingabe der Fahrtrichtung mittels einer der Fahrtrichtungssymbole 24, 26 ist dabei nicht mehr erforderlich. Dies vereinfacht die Rufeingabe für Passagiere P mit und ohne körperliche Einschränkungen.

## Patentansprüche

1. Aufzugsanlage (1), aufweisend:
eine Aufzugssteuerung (13);
eine Aufzugskabine (10), die gesteuert durch die Aufzugssteuerung (13) zwischen Stockwerken (L1, L2) verfahrbar ist, wobei in der Aufzugskabine (10) eine mit der Aufzugssteuerung (13) kommunikativ verbundene Kabinenrufeinrichtung (4) zur Eingabe eines Zielstockwerks angeordnet ist;
Aufzugsbedieneinrichtungen (6), die mit der Aufzugssteuerung (13) kommunikativ verbunden und auf den Stockwerken (L1, L2) zur Eingabe eines Aufzugsrufs angeordnet sind, wobei eine Aufzugsbedieneinrichtung (6) eine Kommunikationseinrichtung (53) für eine Kommunikation mit der Aufzugssteuerung (13), eine zentrale Steuer- und Verarbeitungseinrichtung (43) und ein berührungsempfindliches, mit einer im Wesentlichen glatten Berührungsfläche (35) ausgestattetes Bildschirmsystem (68) hat, das ausgestaltet ist, auf eine Berührung der Berührungsfläche (35) durch einen Passagier (P) mit einer taktil wahrnehmbaren Rückmeldung zu reagieren, wobei die zentrale Steuer- und Verarbeitungseinrichtung (43) mit der Kommunikationseinrichtung (53) und dem Bildschirmsystem (68) kommunikativ verbunden ist,
wobei die Aufzugssteuerung (13) ausgestaltet ist, eine Aufzugsbedieneinrichtung (6) in einem Normalbetriebsmodus der Aufzugsanlage (1) mit einem ersten Steuersignal so anzusteuern, dass das Bildschirmsystem (68) mindestens ein Rufsymbol (23, 24, 26) auf einer Benutzeroberfläche (34) anzeigt,
wobei die Aufzugssteuerung (13) ausgestaltet ist, eine Aufzugsbedieneinrichtung (6) in einem Ausnahmebetriebsmodus der Aufzugsanlage (1) mit einem zweiten Steuersignal so anzusteuern, dass das Bildschirmsystem (68) eine Ausnahmebetriebsmeldung (36) auf der Benutzeroberfläche (34) anzeigt,
wobei die zentrale Steuer- und Verarbeitungseinrichtung (43) ausgestaltet ist, im Normalbetriebsmodus bei Ansteuerung durch die Aufzugssteuerung (13) mit dem ersten Steuersignal das Bildschirmsystem (68) so anzusteuern, dass die Benutzeroberfläche (34) das mindestens eine Rufsymbol (23, 24, 26) anzeigt, und
im Ausnahmebetriebsmodus bei Ansteuerung durch die Aufzugssteuerung (13) mit dem zweiten Steuersignal das Bildschirmsystem (68) so anzusteuern, dass das Bildschirmsystem (68) auf der Benutzeroberfläche (34) die Ausnahmebetriebsmeldung (36) anzeigt.

2. Aufzugsanlage (1) nach Anspruch 1, wobei das Bildschirmsystem (68) ausserdem ausgestaltet ist, bei Berührung des mindestens einen Rufsymbols (23, 24, 26) durch den Passagier (P) mit der taktil wahrnehmbaren Rückmeldung zu reagieren und eine Eingabe eines Aufzugsruf zu erkennen, wenn die Berührung eine festgelegte Druckkraft erreicht.

3. Aufzugsanlage nach einem der Ansprüche 1 oder 2, bei der das berührungsempfindliche Bildschirmsystem (68) einen Aktuator (62) umfasst, der bei Ansteuerung durch eine Steuerspannung eine Vibration einer Oberfläche des Bildschirmsystems (68) verursacht, wobei die Vibration die taktil wahrnehmbare Rückmeldung darstellt, und bei der das berührungsempfindliche Bildschirmsystem (68) eine Kraftmesseinrichtung (60) und eine Steuereinrichtung (58) umfasst, wobei die Kraftmesseinrichtung (60) ausgestaltet ist, eine Druckkraft zu messen, mit der der Passagier (P) auf die Berührungsfläche (35) des berührungsempfindlichen Bildschirmsystems (68) drückt, und wobei die Steuereinrichtung (58) ausgestaltet ist, die gemessene Kraft erst dann als Auslösekraft zu registrieren, wenn die gemessene Druckkraft einen festgelegten Schwellenwert erreicht.

4. Aufzugsanlage nach einem der vorhergehenden Ansprüche, bei der eine Aufzugsbedieneinrichtung (6) eine Audioeinrichtung (52) für eine Sprachmitteilung umfasst, wobei die Aufzugsbedieneinrichtung (6) ausgestaltet ist, die Sprachmitteilung in Verbindung mit der taktil wahrnehmbaren Rückmeldung zu erzeugen.

5. Aufzugsanlage (1) nach einem der vorhergehenden Ansprüche, bei der die Aufzugssteuerung (13) ausgestaltet ist, eine Aufzugsbedieneinrichtung (6) im Normalbetriebsmodus so anzusteuern, dass das Bildschirmsystem (68) zusätzlich zu dem mindestens einen Rufsymbol (23, 24, 26) mindestens ein Informationsfeld (30, 32) anzeigt, wobei das Bildschirmsystem (68) ausgestaltet ist, bei Berührung des mindestens einen Informationsfeldes (30, 32) durch einen Passagier (P) mit der taktil wahrnehmbaren Rückmeldung zu reagieren.

6. Aufzugsanlage (1) nach Anspruch 5, bei der ein Informationsfeld (30) Information zu einem festgelegten Stockwerk anzeigt, wobei eine Aufzugsbedieneinrichtung (6) ausgestaltet ist, bei Berührung des Informationsfelds (30) durch den Passagier (P) die taktil wahrnehmbare Rückmeldung und eine dem Informationsfeld (30) zugeordnete Sprachmitteilung zu erzeugen und, wenn die Druckkraft gleich einem festgelegten Schwellenwert ist, einen Fahrtwunsch in Richtung des festgelegten Stockwerks zu registrieren.

7. Aufzugsanlage (1) nach einem der vorhergehenden Ansprüche, bei der eine Aufzugsbedieneinrichtung (6) ein mit der Aufzugssteuerung (13) kommunikativ verbundenes Lesegerät (40) für einen Berechtigungsnachweis des Passagiers (P) hat, wobei die Aufzugsbedieneinrichtung (6) ausgestaltet ist, bei gültigem Berechtigungsnachweis die Eingabe eines Aufzugsrufs freizugeben.

8. Aufzugsanlage (1) nach einem der vorhergehenden Ansprüche, wobei das mindestens eine Rufsymbol (23, 24, 26) ein Fahrtrichtungssymbol ist.

9. Aufzugsbedieneinrichtung (6) zur Eingabe eines Aufzugsrufs in einer Aufzugsanlage (1) nach einem der vorhergehenden Ansprüche.

## Claims

1. Elevator system (1) comprising:
an elevator controller (13);
an elevator car (10), which can be moved, in a manner controlled by the elevator controller (13), between floors (L1, L2), wherein a car call device (4), which is communicatively connected to the elevator controller (13) and is intended for inputting a destination floor, is arranged in the elevator car (10);
elevator operating devices (6), which are communicatively connected to the elevator controller (13) and are arranged on the floors (L1, L2) for inputting an elevator call, wherein an elevator operating device (6) has a communication device (53) for communication with the elevator controller (13), a central control and processing device (43), and a touch-sensitive screen system (68) which is equipped with a substantially smooth contact surface (35) and is designed to respond with tactilely perceptible feedback to the contact surface (35) being touched by a passenger (P), wherein the central control and processing device (43) is communicatively connected to the communication device (53) and the screen system (68),
wherein the elevator controller (13) is configured, in a normal operation mode of the elevator system (1), to actuate an elevator operating device (6) by means of a first control signal such that the screen system (68) displays at least one call symbol (23, 24, 26) on a user interface (34),
wherein the elevator controller (13) is configured, in an emergency operation mode of the elevator system (1), to actuate an elevator operation device (6) by means of a second control signal such that the screen system (68) displays an emergency operation message (36) on the user interface (34),
wherein the central control and processing device (43) is configured, in the normal operation mode, when actuated by the elevator controller (13), to actuate the screen system (68) by means of the first control signal such that the user interface (34) displays the at least one call symbol (23, 24, 26), and
in the emergency operation mode, when actuated by the elevator controller (13), to actuate the screen system (68) by means of a second control signal such that the screen system (68) displays the emergency operation message (36) on the user interface (34).

2. Elevator system (1) according to claim 1, wherein the screen system (68) is also configured to respond with the tactilely perceptible feedback when the at least one call symbol (23, 24, 26) is touched by the passenger (P) and to identify input of an elevator call when the touch reaches a specified pressure force.

3. Elevator system according to either claim 1 or claim 2, wherein the touch-sensitive screen system (68) comprises an actuator (62) which, when actuated by a control voltage, causes a surface of the screen system (68) to vibrate, the vibration constituting the tactilely perceptible feedback, and wherein the touch-sensitive screen system (68) comprises a force measuring device (60) and a control device (58), the force measuring device (60) being configured to measure a pressure force with which the passenger (P) presses on the touch surface (35) of the touch-sensitive screen system (68), and the control device (58) being configured to register the measured force as a triggering force only when the measured pressure force reaches a specified threshold value.

4. Elevator system according to any of the preceding claims, wherein an elevator operating device (6) comprises an audio device (52) for a voice message, the elevator operating device (6) being configured to generate the voice message in conjunction with the tactilely perceptible feedback.

5. Elevator system (1) according to any of the preceding claims, wherein the elevator controller (13) is configured to actuate an elevator operating device (6) in the normal operation mode such that the screen system (68) displays at least one information field (30, 32) in addition to the at least one call symbol (23, 24, 26), the screen system (68) being configured to respond with the tactilely perceptible feedback when the at least one information field (30, 32) is touched by a passenger (P).

6. Elevator system (1) according to claim 5, wherein an information field (30) displays information regarding a specified floor, an elevator operating device (6) being configured, when the information field (30) is touched by the passenger (P), to generate the tactilely perceptible feedback and a voice message assigned to the information field (30) and, if the pressure force is equal to a specified threshold value, to register a request to travel in the direction of the specified floor.

7. Elevator system (1) according to any of the preceding claims, wherein an elevator operating device (6) has a reader (40), communicatively connected to the elevator controller (13), for credentials of the passenger (P), the elevator operating device (6) being configured to authorize the input of an elevator call when the credentials are valid.

8. Elevator system (1) according to any of the preceding claims, wherein the at least one call symbol (23, 24, 26) is a direction of travel symbol.

9. Elevator operating device (6) for inputting an elevator call in an elevator system (1) according to any of the preceding claims.

## Revendications

1. Installation d'ascenseur (1) présentant :
une commande d'ascenseur (13) ;
une cabine d'ascenseur (10) qui peut être déplacée de manière commandée entre des étages (L1, L2) par la commande d'ascenseur (13), un dispositif d'appel de cabine (4) relié de manière communicative à la commande d'ascenseur (13) étant disposé dans la cabine d'ascenseur (10) pour l'entrée d'un étage de destination ;
des dispositifs de manoeuvre d'ascenseur (6) reliés de manière communicative à la commande d'ascenseur (13) et disposés aux étages (L1, L2) pour l'entrée d'un appel d'ascenseur, un dispositif de manoeuvre d'ascenseur (6) possédant un dispositif de communication (53) pour une communication avec la commande d'ascenseur (13), un dispositif de commande et de traitement central (43) et un système d'écran (68) sensible au toucher et équipé d'une surface de contact (35) sensiblement lisse, lequel système d'écran étant configuré pour réagir à un toucher de la surface de contact (35) par un passager (P) avec une réponse perceptible de manière tactile, le dispositif de commande et de traitement central (43) étant relié de manière communicative au dispositif de communication (53) et au système d'écran (68),
la commande d'ascenseur (13) étant configurée pour commander, au moyen d'un premier signal de commande, un dispositif de manoeuvre d'ascenseur (6) dans un mode de fonctionnement normal de l'installation d'ascenseur (1), de sorte que le système d'écran (68) affiche au moins un symbole d'appel (23, 24, 26) sur une interface utilisateur (34),
la commande d'ascenseur (13) étant configurée pour commander, au moyen d'un second signal de commande, un dispositif de manoeuvre d'ascenseur (6) dans un mode de fonctionnement exceptionnel de l'installation d'ascenseur (1), de sorte que le système d'écran (68) affiche un message de fonctionnement exceptionnel (36) sur l'interface utilisateur (34),
le dispositif de commande et de traitement central (43) étant configuré pour commander le système d'écran (68) au moyen du premier signal de commande dans le mode de fonctionnement normal lors de la commande par la commande d'ascenseur (13), de sorte que l'interface utilisateur (34) affiche l'au moins un symbole d'appel (23, 24, 26), et
pour commander le système d'écran (68) au moyen du second signal de commande dans le mode de fonctionnement exceptionnel lors de la commande par la commande d'ascenseur (13), de sorte que le système d'écran (68) affiche le message de fonctionnement exceptionnel (36) sur l'interface utilisateur (34).

2. Installation d'ascenseur (1) selon la revendication 1, dans laquelle le système d'écran (68) est en outre configuré pour réagir avec la réponse perceptible de manière tactile lorsque le passager (P) touche l'au moins un symbole d'appel (23, 24, 26), et pour détecter une entrée d'un appel d'ascenseur lorsque le toucher atteint une force de pression définie.

3. Installation d'ascenseur selon l'une des revendications 1 ou 2, dans laquelle le système d'écran (68) sensible au toucher comprend un actionneur (62) qui provoque une vibration d'une surface du système d'écran (68) lors de la commande par une tension de commande, la vibration représentant la réponse perceptible de manière tactile, et dans laquelle le système d'écran (68) sensible au toucher comprend un dispositif de mesure de force (60) et un dispositif de commande (58), le dispositif de mesure de force (60) étant configuré pour mesurer une force de pression avec laquelle le passager (P) appuie sur la surface de contact (35) du système d'écran (68) sensible au toucher, et le dispositif de commande (58) étant configuré pour enregistrer la force mesurée en tant que force de déclenchement uniquement lorsque la force de pression mesurée atteint une valeur seuil définie.

4. Installation d'ascenseur selon l'une des revendications précédentes, dans laquelle un dispositif de manoeuvre d'ascenseur (6) comprend un dispositif audio (52) pour un message vocal, le dispositif de manoeuvre d'ascenseur (6) étant configuré pour générer le message vocal en rapport avec la réponse perceptible de manière tactile.

5. Installation d'ascenseur (1) selon l'une des revendications précédentes, dans laquelle la commande d'ascenseur (13) est configurée pour commander un dispositif de manoeuvre d'ascenseur (6) dans le mode de fonctionnement normal, de sorte que le système d'écran (68) affiche au moins un champ d'informations (30, 32) en plus de l'au moins un symbole d'appel (23, 24, 26), le système d'écran (68) étant configuré pour réagir avec la réponse perceptible de manière tactile lorsqu'un passager (P) touche l'au moins un champ d'informations (30, 32).

6. Installation d'ascenseur (1) selon la revendication 5, dans laquelle un champ d'informations (30) affiche des informations concernant un étage défini, un dispositif de manoeuvre d'ascenseur (6) étant configuré pour générer la réponse perceptible de manière tactile et un message vocal associé au champ d'informations (30) lorsque le passager (P) touche le champ d'informations (30), et pour enregistrer une intention de trajet en direction de l'étage défini lorsque la force de pression est égale à une valeur seuil définie.

7. Installation d'ascenseur (1) selon l'une des revendications précédentes, dans laquelle un dispositif de manoeuvre d'ascenseur (6) possède un appareil de lecture (40) relié de manière communicative à la commande d'ascenseur (13) pour des informations d'identification du passager (P), le dispositif de manoeuvre d'ascenseur (6) étant configuré pour valider l'entrée d'un appel d'ascenseur en cas de validité des informations d'identification.

8. Installation d'ascenseur (1) selon l'une des revendications précédentes, dans laquelle l'au moins un symbole d'appel (23, 24, 26) est un symbole de direction de trajet.

9. Dispositif de manoeuvre d'ascenseur (6) pour l'entrée d'un appel d'ascenseur dans une installation d'ascenseur (1) selon l'une des revendications précédentes.
